# FASCICULE DE BREVET EUROPEEN

(11) **EP 1 175 813 B1**
(45) Date de publication et mention de la délivrance du brevet: **26.05.2004**
(21) Numéro de dépôt: 00925367.5
(22) Date de dépôt: 28.04.2000
(51) Int. Cl.: H05B 3/84

(54) **VITRAGES CHAUFFANTS, EN PARTICULIER POUR VEHICULES**
HEIZBARE GLASSCHEIBEN, INSBESONDERE FÜR KRAFTFAHRZEUGE
HEATED GLASS PANES, IN PARTICULAR FOR VEHICLES

(30) Priorité: 30.04.1999 FR 9905520
(43) Date de publication de la demande: 30.01.2002
(73) Titulaire: SAINT-GOBAIN GLASS FRANCE, 92400 Courbevoie (FR)
(72) Inventeur: MOTTELET, Béatrice, F-60200 Compiègne (FR); LETEMPS, Bernard, F-60150 Thourotte (FR); MATHIVAT, Denis, 60150 Thourotte (FR)
(74) Mandataire: Muller, René
(86) Numéro de dépôt international: PCT/FR2000/001173
(87) Numéro de publication internationale: WO 2000/067530

(56) Documents cités:
- DE-A- 3 828 526
- GB-A- 2 042 859
- GB-A- 2 186 769
- US-A- 3 982 092
- US-A- 5 496 989

## Description

La présente invention concerne un vitrage chauffant électrique, en particulier pour véhicule automobile.

Les vitrages chauffants utilisés dans les véhicules automobiles sont généralement composés d'au moins une feuille de verre munie sur une de ses faces d'un réseau chauffant constitué de bandes de résistance branchées en parallèle. Ce réseau permet généralement le dégivrage ou le désembuage du vitrage. Les bandes de résistance peuvent présenter une section constante mais il est également connu de faire varier leur largeur d'un bout à l'autre du vitrage afin d'avoir des zones de chauffage renforcées et des champs de vision préférentiels. Dans tous ces vitrages, la même puissance nominale est appliquée à l'ensemble des bandes de résistance pendant la durée nécessaire au dégivrage ou au désembuage du vitrage.

Le réseau chauffant de tels vitrages peut également comprendre plusieurs zones de chauffage fonctionnant séquentiellement et par cycles (voir US-A-3 982 092). Le chauffage de chaque zone est contrôlé au moyen d'un thermostat différentiel fonctionnant sur une plage de température étroite, par exemple 10 à 30°C. Avec ce type de vitrages, on ne peut cependant pas adapter la durée ou la puissance de chauffage aux conditions extérieures telles que la température, l'épaisseur du givre ou la quantité de buée. En effet, la première zone est chauffée dès que la température extérieure est inférieure à la température basse (10°C) du thermostat, et l'arrêt du chauffage de cette zone, pour passer à la zone suivante, intervient seulement lorsque la température atteint la température haute (30°C) du thermostat.

Dans le domaine de l'automobile, la tendance est à la multiplication des moteurs de toute sorte (réglage de sièges, serrures de portes, lève glace, rétroviseurs,... ). Dans ce but, on cherche à réduire la consommation d'énergie des vitrages chauffants électriques en diminuant la puissance consommée ou la durée de chauffage sans affecter l'efficacité du dégivrage ou du désembuage.

A cette fin, on peut, comme cela est décrit dans US-A-5 496 989, associer au vitrage un dispositif électronique qui permet de contrôler la température extérieure et de dispenser la puissance minimale nécessaire pour chauffer la surface du verre.

La présente invention a donc pour but de proposer un vitrage chauffant économique, notamment un vitrage chauffant pouvant avantageusement être utilisé comme lunette arrière dans un véhicule automobile. ledit vitrage permettant un désembuage ou un dégivrage efficace avec une durée de chauffage réduite et/ou un gain de la puissance consommée.

Ce but est atteint par le vitrage selon l'invention comprenant au moins une feuille de verre munie de bandes chauffantes alimentées par des collecteurs, les bandes chauffantes étant séparées en groupes, l'alimentation des différents groupes se faisant de façon séquentielle, chaque groupe étant alimenté une seule fois par séquence, l'alimentation se faisant au moyen d'un dispositif équipé de moyens permettant de mesurer la température extérieure et la température de surface externe du verre, de déterminer un temps de chauffage minimal pour chaque groupe en fonction de ladite température extérieure, et de maintenir le chauffage dans ledit groupe tant que la température de surface externe du verre en regard dudit groupe est inférieure ou égale à la température de fusion de la glace.

Le vitrage selon l'invention est préférentiellement une lunette arrière de véhicule automobile, mais il peut également s'agir d'un pare-brise ou de tout autre vitrage pour l'automobile ou d'un vitrage utilisé dans d'autres applications que l'automobile. Ce vitrage peut comprendre une ou plusieurs feuilles de verre et, éventuellement une ou plusieurs feuilles plastiques. Dans la plupart des cas, il s'agit d'un vitrage monolithique comprenant une feuille de verre trempé ou, éventuellement il s'agit d'un vitrage feuilleté comprenant au moins deux feuilles de verre séparées par un intercalaire plastique ou encore d'un vitrage blindé comprenant en outre au moins une feuille ayant les propriétés de blindage requises. Le vitrage peut également être bombé. Les bandes chauffantes se trouvent sur au moins une face (et généralement sur une seule face) d'une feuille de verre du vitrage et/ou, le cas échéant, se trouvent sur ou sont noyées dans un intercalaire plastique du vitrage.

Les bandes chauffantes sont généralement des couches transparentes électriquement conductrices présentant une résistance suffisante (généralement de l'ordre de 0,1 Ω et pouvant aller jusqu'à 200 Ω), par exemple une couche renfermant un oxyde métallique tel que l'oxyde d'étain, ou sont des fils conducteurs métalliques présentant une résistivité suffisante, par exemple des fils fins en tungstène, ou sont des fils d'une composition électriquement conductrice (généralement de l'émail) présentant également une résistivité suffisante (c'est-à-dire généralement de l'ordre de quelques µΩ.cm et pouvant aller jusqu'à 50 µΩ.cm dans la présente invention). Les compositions conductrices employées sont généralement sous la forme d'une suspension d'argent métallique et de fritte de verre dans un liant organique, et sont généralement déposées par sérigraphie ou toute autre technique équivalente avant d'être séchées et cuites à haute température (par exemple au cours du traitement de bombage et/ou de trempe du verre) sur le vitrage. De tels fils peuvent également être renforcées par la suite, par un traitement électrolytique ou par un dépôt métallique n'utilisant pas de courant électrique pour atteindre la valeur de résistance désirée. De préférence, on utilise des fils sérigraphiés pour les vitrages formés d'une feuille de verre trempé et pour les vitrages feuilletés, et on utilise des fils en tungstène pour les vitrages feuilletés.

Les bandes chauffantes peuvent être ondulées ou droites et sont préférentiellement des bandes étroites, par exemple de l'ordre de 10 mm dans le domaine de l'automobile et jusqu'à 100 mm pour les vitrages employés dans le bâtiment pour les couches conductrices, de l'ordre de 0,2 à 0.8 mm pour les fils sérigraphiés et de l'ordre de 25 à 50 µm pour les fils en tungstène. De préférence également, les bandes sont disposées avec un écartement entre bandes voisines pouvant atteindre quelques centimètres. Avantageusement, ces bandes sont également disposées horizontalement (généralement suivant la plus grande dimension du vitrage) en position d'utilisation du vitrage, notamment pour une lunette arrière, et sont isorésistantes c'est-à-dire qu'elles présentent une résistivité constante sur toute leur longueur. Par exemple, les bandes sont des couches transparentes ou des fils sérigraphiés uniformes à la fois en termes de composition conductrice et d'épaisseur, ou sont des fils métalliques de section constante.

Les bandes chauffantes, au niveau des deux bords latéraux du vitrage, sont connectées à des éléments de raccordement électrique aux câbles d'amenée de courant, ces éléments étant appelés pièces de connexion ou cosses d'amenée du courant ou bandes collectrices ou « bus bars ». Dans la présente invention, ces éléments sont désignés ci-après plus simplement par « collecteurs ». Ces collecteurs se présentent par exemple sous forme de bandes ou lamelles métalliques (par exemple sous forme de clinquants de cuivre étamé) fixées par exemple par soudage sur le vitrage. Chaque groupe étant alimenté séparément a ses propres collecteurs. Ceux-ci peuvent être obtenus en coupant les bandes collectrices habituelles en plusieurs parties séparées par des isolants ou on peut utiliser plusieurs collecteurs, le nombre de collecteurs ou de parties séparées dans les collecteurs dépendant du nombre de groupes à alimenter.

Selon la définition de l'invention, l'alimentation se fait de façon séquentielle, chaque groupe étant alimenté par ses propres collecteurs et chaque groupe étant alimenté une seule fois par séquence. Par « séquence », on entend ici l'opération qui consiste à chauffer une seule fois chaque groupe de bandes chauffantes dans un ordre déterminé en vue d'obtenir le dégivrage et/ou le désembuage du vitrage. L'alimentation séquentielle des groupes est contrôlée par un dispositif équipé de moyens permettant d'établir la séquence d'alimentation, c'est-à-dire l'ordre dans lequel les différents groupes sont alimentés les uns après les autres, et de déterminer la durée de chauffage de chacun de ces groupes. A cet effet, on peut utiliser un boîtier électronique de gestion ou un dispositif de commande relié aux collecteurs qui comprend des moyens de mesure de la température extérieure et de la température de surface du verre, le boîtier ou dispositif de commande étant programmé pour associer un temps de chauffage ou d'alimentation minimal à chaque groupe en fonction de la température mesurée, et qui maintient le chauffage tant que le givre subsiste (c'est-à-dire tant que la température de surface externe du verre en regard du groupe chauffant est inférieure à la température de fusion de la glace). En général, la température de fusion est égale au point de fusion de la glace mesuré dans des conditions normales (0°C) mais elle peut varier sensiblement en fonction de l'altitude à laquelle on se trouve et de la pureté de l'eau. Le temps de chauffage minimal dépend de plusieurs paramètres tels que la nature du vitrage (dimension, nombre de groupes chauffants, nombre et nature de bandes chauffantes, ...) et la nature du dépôt (givre. buée). Dans le cas du dégivrage et pour un vitrage donné, le temps de chauffage minimal pour une température extérieure (en général négative) donnée est déterminé expérimentalement en mesurant le temps pendant lequel il est nécessaire de chauffer chaque groupe pour éliminer entièrement une couche de givre de caractéristiques données. Une fois programmé, le boîtier électronique ou le dispositif de commande associe à la température mesurée un temps de chauffage minimal pour chaque groupe et maintient le chauffage tant que la température de surface du verre est inférieure à la valeur de référence. Pour déterminer les différentes températures, on peut utiliser tout type de dispositif approprié, par exemple un capteur de température. Le capteur de température extérieure peut être placé à tout endroit du véhicule, pour autant qu'il soit éloigné d'une source de chaleur ou exposé au rayonnement solaire, par exemple sous le capot d'un véhicule automobile. Le capteur de température de surface du verre peut être placé sur la face externe du vitrage ou sur la face interne, et il est généralement placé à proximité du collecteur d'alimentation, essentiellement pour des raisons de facilité de mise en oeuvre et de coût. De préférence, chaque groupe chauffant est muni d'un capteur de température de la surface du verre. De manière générale et de préférence, le capteur de température de la surface du verre est placé sur la face interne du vitrage (afin d'éviter toute aspérité en surface externe), ce qui nécessite de corriger la valeur de référence choisie ou la valeur mesurée par le capteur en appliquant un coefficient de correction propre au vitrage considéré.

De manière particulièrement préférée, le vitrage est équipé d'un boîtier de gestion électronique ou d'un dispositif de commande des collecteurs, ce boîtier ou dispositif étant relié à un capteur pour la mesure de la température extérieure et à autant de capteurs de mesure de la température de surface du verre que de groupes chauffants, chaque groupe chauffant n'étant relié qu'à un seul capteur de température de la surface du verre.

Le dégivrage ou désembuage peut être déclenché manuellement le capteur de température extérieure mesurant la température au moment où on déclenche le dégivrage. En fonction de la température mesurée, le premier groupe chauffant est alimenté pendant la durée correspondant au temps de chauffage minimal, ou d'avantage selon la température de surface du verre mesurée, puis on passe au groupe suivant. Lorsque le dernier groupe a été chauffé, l'alimentation est coupée ou, le cas échéant, une nouvelle séquence est initiée. En général, une seule séquence suffit pour atteindre un niveau de dégivrage ou désembuage satisfaisant.

Le dégivrage ou désembuage peut également être automatique et s'affranchir de tout démarrage manuel, le boîtier ou le dispositif de commande étant par exemple programmé pour préserver la visibilité en cas de givre ou de buée, ceci présentant également un avantage en termes de commodité et d'économie de courant. Le vitrage peut comprendre, par exemple en série, sur son circuit d'alimentation, un dispositif conduisant le courant lorsqu'il est recouvert de givre ou de buée et coupant le courant d'alimentation lorsque le givre ou la buée ont disparu, par exemple un dispositif électronique comprenant au moins un transistor de puissance. Il peut comprendre en outre un dispositif spécifique anti-buée et d'autre(s) détecteur(s) sensible(s) aux conditions atmosphériques (détecteur de buée, d'humidité, systèmes d'électrodes, détecteur ou capteur thermique ...) placé(s) par exemple sur la face interne du vitrage, ce(s) détecteur(s) commandant une séquence l'alimentation des bandes chauffantes. On peut également fixer un seuil (par exemple 3°C) au-dessus duquel le dégivrage ne peut être mis en route pour des raisons de sécurité.

De préférence, les bandes étant placées horizontalement, le chauffage est opéré en commençant par le groupe se trouvant dans la partie supérieure du vitrage en position d'utilisation afin que l'écoulement d'eau se produisant à la suite de ce chauffage contribue au dégivrage des parties inférieures. Il n'est cependant pas exclu de commencer par un autre groupe, par exemple par un groupe médian (le cas échéant) ou par un groupe inférieur. Les groupes sont alimentés l'un après l'autre suivant la séquence choisie. Avantageusement, un seul groupe est alimenté à la fois, l'alimentation de chaque groupe n'étant faite qu'une seule fois par séquence. Eventuellement, l'alimentation d'un groupe ou de plusieurs groupes successivement peut être redémarrée en cas de réapparition de givre ou de buée, à la fin de la séquence.

La structure et la mise en oeuvre particulières du vitrage selon l'invention permettent un dégivrage rapide contribuant à améliorer la sécurité de conduite. et sont particulièrement avantageux lorsque la puissance électrique disponible est limitée. En général, au bout de 2 à 6 minutes, le premier groupe de bandes, notamment lorsqu'il s'agit de fils, est entièrement dégivré alors que sur les vitrages existants, il faut de l'ordre de 12 minutes pour avoir une zone préférentielle dégivrée. Avantageusement, pour une puissance dissipée identique, on gagne 30 % de temps de dégivrage ou de désembuage avec les vitrages selon l'invention par rapport aux vitrages existants fonctionnant de manière non séquentielle, ou si l'on utilise un temps de dégivrage ou de désembuage identique, la puissance moyenne dissipée est inférieure de 30 % à celle de ces mêmes vitrages. On remarque également que la puissance dissipée est plus constante alors que dans les vitrages existants elle peut varier de l'ordre de 10 % en cours de fonctionnement. Un autre avantage est qu'il n'est pas nécessaire de prévoir des résistances présentant (dans le sens horizontal notamment) des zones de chauffage renforcées, par exemple en faisant varier la composition ou l'épaisseur des couches, la largeur ou l'épaisseur des fils sérigraphiés ou la section des fils métalliques dans les zones de chauffage les moins importantes, la réalisation de tels vitrages étant nettement plus compliquée. Avantageusement, le vitrage selon l'invention peut être pourvu de conducteurs présentant une section et une épaisseur constante (même s'il n'est pas exclu d'utiliser des conducteurs de section et/ou d'épaisseur et/ou de composition variable) et peut donc être réalisé facilement et économiquement.

Chaque groupe comprend une ou plusieurs bandes, de préférence comprend de deux à 10 bandes chauffantes, et de façon particulièrement préférée comprend trois à 7 bandes chauffantes, les bandes chauffantes étant montées en parallèle au sein de chaque groupe. Chaque groupe a ses propres collecteurs et chaque collecteur alimente un seul groupe. Le vitrage présente dans le sens vertical plusieurs zones (groupes) de chauffage séparées les unes des autres et plusieurs zones d'alimentation séparées (une alimentation séparée par groupe), l'alimentation se faisant zone par zone.

Lorsque le vitrage selon l'invention est destiné à un usage automobile, le nombre de groupes chauffants est de préférence égal à 3. Au-delà de 3 groupes, le gain de puissance ou de durée de dégivrage ou de désembuage n'est pas significatif.

Pour les applications automobiles notamment, le réseau électrique alimentant les bandes chauffantes peut fonctionner en 12 Volts (comme habituellement utilisé dans le domaine automobile) mais de préférence il fonctionne en tension plus élevée, par exemple en 24, 30 ou 42 Volts ou plus (tension nominale de la batterie utilisée), l'utilisation d'une tension plus élevée présentant l'avantage de permettre une consommation moindre d'énergie, d'améliorer le rendement du réseau électrique qui amène le courant aux bandes chauffantes (pertes en ligne réduites pour une même puissance - de l'ordre de 180 à 250 Watts pour le dégivrage ou désembuage d'un vitrage - ces pertes en ligne dégradant le rendement du réseau électrique) et d'éviter des phénomènes d'échauffement dans ce réseau, cette augmentation permettant également de diminuer l'encombrement dudit réseau (fils d'alimentation plus fins, transistors de puissance pour alimentation et coupures moins encombrants, matériel plus économique) et de faciliter sa réalisation.

Dans le cas de l'utilisation de cette tension plus élevée et afin d'avoir la puissance nécessaire au dégivrage ou désembuage du vitrage sans échauffement excessif, on peut avantageusement augmenter la résistance des bandes chauffantes, en allongeant par exemple les bandes chauffantes par des déviations (quitte à réduire le cas échéant le nombre de fils par groupe) et/ou en diminuant la section (épaisseur et/ou largeur) des bandes et/ou en réduisant le cas échéant la teneur en oxyde d'étain dans la composition des couches ou la teneur en argent métallique dans la composition des fils sérigraphiés.

Selon le mode de réalisation préféré de l'invention, les groupes de bandes chauffantes sont portés par un même vitrage. Il n'est cependant pas exclu du cadre de l'invention de répartir les groupes sur plusieurs vitrages séparés, chaque vitrage comprenant de préférence au moins deux groupes de bandes chauffantes.

D'autres caractéristiques et avantages de l'invention ressortiront des exemples suivants selon l'invention, donnés à titre illustratif mais non limitatif, par rapport aux exemples comparatifs, ces exemples étant illustrés par les figures suivantes :
- figure 1A : représentation schématique d'un vitrage chauffant selon l'art antérieur (exemple comparatif 1)
- figure 1B : photographie d'un vitrage tel qu'illustré en figure 1A, lors de sa mise en oeuvre, après un temps de dégivrage de quatre minutes :
- figure 2A : représentation schématique d'un vitrage chauffant selon l'invention (exemple 1)
- figure 2B : photographie d'un vitrage tel qu'illustré en figure 2A, lors de sa mise en oeuvre, après un temps de dégivrage de quatre minutes.

### EXEMPLE COMPARATIF 1

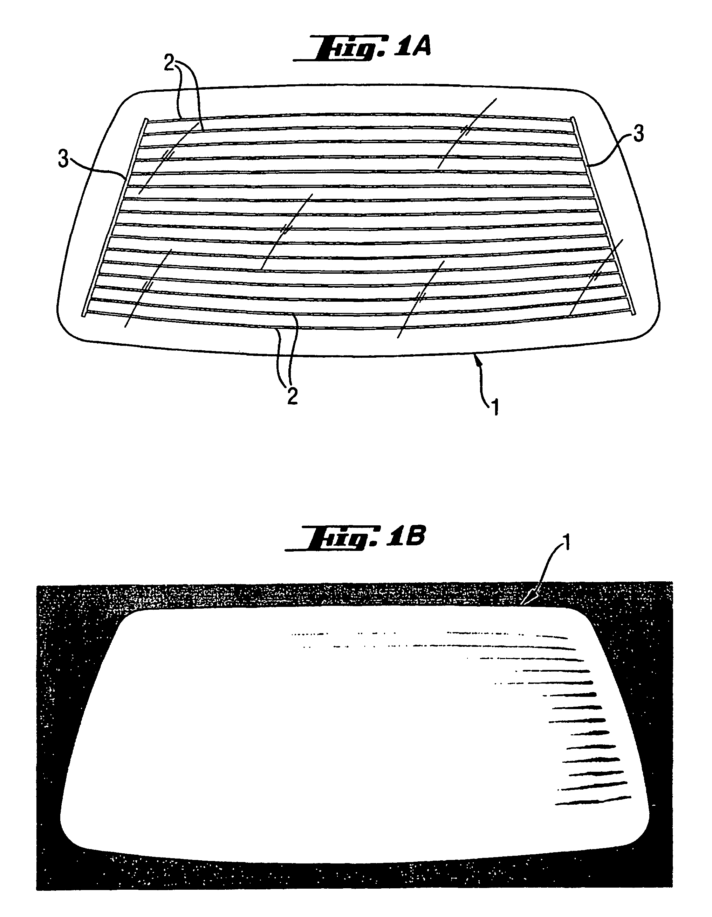

Dans cet exemple et comme illustré en figure 1A, on utilise un vitrage 1, par exemple une lunette arrière, pourvu de 16 bandes chauffantes 2 reliées à des collecteurs communs 3. Les fils sont montés en parallèle. La tension d'alimentation est de 12 V.

Comme on l'observe sur la figure 1B, le dégivrage observé au bout de quatre minutes est très faible, le temps nécessaire pour permettre un début de vision au travers du vitrage étant d'au moins 8 minutes.

### EXEMPLE 1

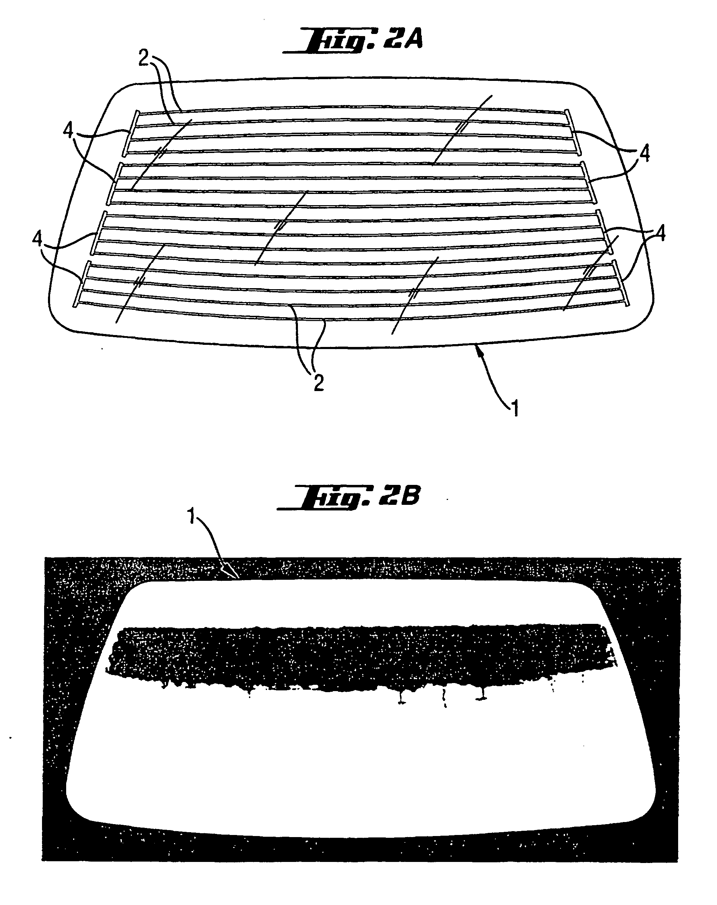

Dans cet exemple selon l'invention illustré en figure 2A, on utilise une lunette arrière 1 pourvue de 16 bandes chauffantes 2 reliées quatre par quatre à des alimentations séparées 4. Les quatre groupes de quatre fils (ces fils étant montés en parallèle dans chaque groupe) sont montés en série. La tension d'alimentation est de 12 V.

Comme on l'observe sur la figure 2B, le dégivrage observé au bout de quatre minutes a déjà permis de dégager une zone de vision importante.

### EXEMPLE COMPARATIF 2

On utilise le vitrage de l'exemple comparatif 1 modifié en ce qu'il est pourvu de 21 bandes chauffantes (fils sérigraphiés).

Sur ce vitrage, on forme une couche de givre de la manière suivante : on place le vitrage à -20°C pendant au moins 12 heures dans des conditions d'humidité contrôlée (faible hygrométrie), et on pulvérise 460 ml d'eau (soit 660 ml/m²) sur le verre, le jet étant placé à environ 40 cm et orienté perpendiculairement à la surface.

Le vitrage est stabilisé pendant 4 heures à -20°C, et on procède au chauffage des bandes chauffantes, la puissance dissipée étant de 210 W. Il faut 10 minutes pour avoir un début de vision au travers du vitrage et 18 minutes pour obtenir le dégivrage complet.

### EXEMPLE 2

On utilise le vitrage de l'exemple 1 modifié en ce qu'il est pourvu de 21 bandes chauffantes reliées 7 par 7 à 3 alimentations électriques séparées reliées à un boîtier électronique de gestion. Le boîtier est relié à un capteur de mesure de la température extérieure (dans le cas présent la température de l'air est égale à celle du verre) et à 3 capteurs de mesure de la température de surface du verre, ces derniers étant situés sur la face du vitrage portant les fils sérigraphiés, à proximité du collecteur alimentant chacun des groupes chauffants supérieur, médian et inférieur (un seul capteur par groupe). Le boîtier est programmé pour associer à la température extérieure mesurée un temps minimal de chauffage, ce temps ayant été préalablement déterminé de manière expérimentale sur le vitrage recouvert d'une couche de givre (formée dans les conditions de l'exemple comparatif 2) à différentes températures (variant de -20°C à 0°C).

Le vitrage recouvert d'une couche de givre obtenue dans les conditions de l'exemple comparatif 2 est placé à -20°C, et les 3 groupes de fils sont alimentés séquentiellement, la puissance dissipée étant égale à 150 W. Le premier groupe (supérieur; surface relative : 31 %) est chauffé pendant 335 secondes, le second groupe (médian ; surface relative 33 %) pendant 357 secondes et le troisième groupe (inférieur ; surface relative : 36 %) pendant 389 secondes.

Avec la puissance indiquée, un tiers environ de la surface du vitrage est totalement dégagée en moins de 6 minutes, et le dégivrage complet du vitrage est obtenu au bout de 18 minutes. Comparé au vitrage selon l'art antérieur chauffé sur toute sa surface (exemple comparatif 2), le vitrage selon l'invention permet un gain de la puissance de 30 %.

Les vitrages selon l'invention sont utilisables notamment dans le domaine de l'automobile.

## Revendications

1. Vitrage comprenant au moins une feuille de verre munie de bandes chauffantes alimentées par des collecteurs, les bandes chauffantes étant séparées en groupes, l'alimentation des différents groupes se faisant de façon séquentielle, chaque groupe étant alimenté une seule fois par séquence, l'alimentation se faisant au moyen d'un dispositif équipé de moyens permettant de mesurer la température extérieure et la température de surface externe du verre, de déterminer un temps de chauffage minimal pour chaque groupe en fonction de ladite température extérieure, et de maintenir le chauffage dans ledit groupe tant que la température de surface externe du verre en regard dudit groupe est inférieure ou égale à la température de fusion de la glace.

2. Vitrage selon la revendication 1, **caractérisé en ce que** les bandes chauffantes sont isorésistantes.

3. Vitrage selon l'une des revendications 1 ou 2, **caractérisé en ce que** les moyens de mesure de la température de surface externe du verre sont placés sur la face interne du vitrage.

4. Vitrage selon l'une des revendications 1 à 3, **caractérisé en ce que** les bandes chauffantes sont des couches transparentes, des fils métalliques ou des fils sérigraphiés.

5. Vitrage selon l'une des revendications 1 à 4, **caractérisé en ce que** les bandes chauffantes sont séparées en au moins 3 groupes.

6. Vitrage selon l'une des revendications 1 à 5, **caractérisé en ce que** le temps de chauffage minimal pour une température extérieure donnée est déterminée en mesurant le temps pendant lequel il est nécessaire de chauffer chaque groupe pour éliminer entièrement une couche de givre de caractéristiques données.

7. Vitrage selon l'une des revendications 1 à 6, **caractérisé en ce qu'**au dispositif est associée une électronique permettant d'effectuer l'alimentation et la coupure des collecteurs.

8. Vitrage selon l'une des revendications 1 à 7, **caractérisé en ce que** les bandes chauffantes sont alimentées par un réseau électrique fonctionnant en plus de 12 V, de préférence en 24, 30 ou 42 V ou plus.

9. Vitrage selon l'une des revendications 1 à 8, **caractérisé en ce que** chaque groupe est alimenté par ses propres collecteurs obtenus en séparant des bandes collectrices à l'aide d'isolants ou en utilisant plusieurs collecteurs.

10. Vitrage selon l'une des revendications 1 à 9, **caractérisé en ce que** l'on commence par alimenter le groupe se trouvant dans la partie supérieure du vitrage, les groupes étant alimentés les uns après les autres.

11. Vitrage selon l'une des revendications 1 à 10, **caractérisé en ce que** chaque groupe comprend entre deux et 10 bandes chauffantes, les bandes chauffantes étant en parallèle au sein de chaque groupe.

12. Vitrage selon l'une des revendications 1 à 11, **caractérisé en ce qu'**il comprend en outre un dispositif spécifique anti-buée.

## Patentansprüche

1. Glas, das mindestens eine Glasscheibe umfasst, welche mit von Stromsammelleitungen elektrisch versorgten Heizbändern versehen ist, die in Gruppen unterteilt sind, wobei die Stromversorgung der einzelnen Gruppen sequentiell erfolgt, jede Gruppe nur ein Mal pro Abfolge mit Strom versorgt wird und die Stromversorgung mittels einer Vorrichtung erfolgt, die mit Mitteln ausgestattet ist, welche die Messung der Außentemperatur und der Temperatur der Außenfläche des Glases, Bestimmung der minimalen Beizungsdauer für jede Gruppe in Abhängigkeit von der Außentemperatur und Aufrechterhaltung der Beheizung in der Gruppe solange die Temperatur der gegenüber dieser Gruppe befindlichen Außenfläche des Glases niedriger als die oder gleich der Schmelztemperatur des Eises ist, ermöglichen.

2. Glas nach Anspruch 1, **dadurch gekennzeichnet, dass** der spezifische elektrische Widerstand der Heizbänder über deren Länge konstant ist.

3. Glas nach Anspruch 1 oder 2, **dadurch gekennzeichnet, dass** die Mittel zur Messung der Temperatur der Außenfläche des Glases auf dessen Innenseite angeordnet sind.

4. Glas nach einem der Ansprüche 1 bis 3, **dadurch gekennzeichnet, dass** die Heizbänder transparente Schichten, Metalldrähte oder durch Siebdruck aufgebracht sind.

5. Glas nach einem der Ansprüche 1 bis 4, **dadurch gekennzeichnet, dass** die Heizbänder in mindestens drei Gruppen unterteilt sind.

6. Glas nach einem der Ansprüche 1 bis 5, **dadurch gekennzeichnet, dass** die minimale Beheizungsdauer bei einer gegebenen Außentemperatur bestimmt wird, indem der Zeitraum gemessen wird, während dessen es erforderlich ist, jede Gruppe zu beheizen, um eine Eisschicht mit gegebenen Charakteristika vollständig zu beseitigen.

7. Glas nach einem der Ansprüche 1 bis 6, **dadurch gekennzeichnet, dass** mit der Vorrichtung eine Elektronik verbunden ist, die es ermöglicht, die Stromsammelleitungen mit Strom zu versorgen oder abzuschalten.

8. Glas nach einem der Ansprüche 1 bis 7, **dadurch gekennzeichnet, dass** die Heizbänder mit Strom von einem Stromnetz versorgt werden, das mit mehr als 12 V, vorzugsweise mit 24, 30 bzw. 42 V oder höher, arbeitet.

9. Glas nach einem der Ansprüche 1 bis 8, **dadurch gekennzeichnet, dass** die Gruppen jeweils mit Strom von ihren eigenen Stromsammelleitungen versorgt werden, die erhalten worden sind, indem Stromsammelbänder mittels Isolatoren getrennt wurden oder indem mehrere Stromsammelleitungen verwendet werden.

10. Glas nach einem der Ansprüche 1 bis 9, **dadurch gekennzeichnet, dass** begonnen wird, indem die Gruppe mit Strom versorgt wird, die sich im oberen Teil des Glases befindet, wonach die Gruppen nacheinander mit Strom versorgt werden.

11. Glas nach einem der Ansprüche 1 bis 10, **dadurch gekennzeichnet, dass** die Gruppen jeweils zwei bis 10 Heizbänder umfassen, die in der jeweiligen Gruppe zueinander parallel verlaufen.

12. Glas nach einem der Ansprüche 1 bis 11, **dadurch gekennzeichnet, dass** es außerdem eine spezielle das Beschlagen verhindernde Vorrichtung umfasst.

## Claims

1. Glazing pane comprising at least one sheet of glass provided,with heating strips supplied by collectors, the heating strips being separated into groups, the supply to the various groups taking place sequentially, each group being supplied only once in sequence, the supply taking place by means of a device equipped with means for measuring the outside temperature and the external surface temperature of the glass, determining a minimum heating time for each group according to the said outside temperature, and maintaining the heating in the said group as long as the external surface temperature of the glass facing the said group is less than or equal to the melting point of ice.

2. Glazing pane according to Claim 1, **characterised in that** the heating strips are isoresistive.

3. Glazing pane according to one of Claims 1 or 2, **characterised in that** the means of measuring the external surface temperature of the glass are placed on the internal face of the glazing.

4. Glazing pane according to one of Claims 1 to 3, **characterised in that** the heating strips are transparent layers, metallic wires or screen-printed wires.

5. Glazing pane according to one of Claims 1 to 4, **characterised in that** the heating strips are separated into at least three groups.

6. Glazing pane according to one of Claims 1 to 5, **characterised in that** the minimum heating time for a given outside temperature is determined by measuring the time during which it is necessary to heat each group in order to entirely eliminate a layer of frost of given characteristics.

7. Glazing pane according to one of Claims 1 to 6, **characterised in that** electronics are associated with the device for effecting the supply and cutting off of the collectors.

8. Glazing pane according to one of Claims 1 to 7, **characterised in that** the heating strips are supplied by an electrical system functioning at more than 12 V, preferably 24, 30 or 42 V or more.

9. Glazing pane according to one of Claims 1 to 8, **characterised in that** each group is supplied by its own collectors obtained by separating collecting strips by means of insulants or using several collectors.

10. Glazing pane according to one of Claims 1 to 9, **characterised in that** the first step is to supply the group situated in the top part of the glazing, the groups being supplied one after the other.

11. Glazing pane according to one of Claims 1 to 10, **characterised in that** each group comprises between two and ten heating strips, the heating strips being in parallel within each group.

12. Glazing pane according to one of Claims 1 to 11, **characterised in that** it also comprises a specific anti-mist device.
